Europäisches Patentamt

European Patent Office

Office européen des brevets

(11) Publication number: **0 441 489 A2**

# EUROPEAN PATENT APPLICATION

(21) Application number: 91300397.6

(22) Date of filing: 18.01.91

(51) Int. Cl.5: **G09B 29/10**, G09B 29/00

(30) Priority: **07.02.90 GB 9002753**

(43) Date of publication of application:
**14.08.91 Bulletin 91/33**

(84) Designated Contracting States:
**DE FR**

(71) Applicant: **GEC-MARCONI LIMITED**
**The Grove, Warren Lane**
**Stanmore, Middlesex HA7 4LY(GB)**

(72) Inventor: **Chalmers, Paul Andrew**
**29 Stoneham Park**
**Petersfield, Hampshire, GU32 3BT(GB)**

(74) Representative: **Keppler, William Patrick**
**Central Patent Department Wembley Office**
**The General Electric Company, p.l.c. Hirst**
**Research Centre East Lane**
**Wembley Middlesex HA9 7PP(GB)**

(54) **Display system.**

(57) A display system suitable for use by a service organisation in which the location and activity of employees is displayed on an electronic map (1) controlled by a computer (2) at an operational control centre. By the use of a communication link (14), such as a radio link (7,8), to the control centre and a speech-recognition processor (4), system users can automatically and remotely up-date the information displayed on the map by giving appropriate spoken commands. A speech-recognition processor programmed exclusively to recognise authorised system users provides a high degree of system security. Information collected by a number of such systems may be shared by the use of Local and Wide Area Networks to permit coverage of large geographic areas, enabling the provision of a distributed or centralised database of resource locations and availability.

*Fig. 1.*

## DISPLAY SYSTEM

This invention relates to a display system and in particular to a display system for displaying a map and the current locations of persons or mobile units on the map.

In a service organisation in which a group of persons or mobile units provide a service in a particular area, it is desirable for the purposes of efficient use of manpower and good service to customers to keep a close check on the location of the persons or units. One way of achieving this objective is to represent the persons by means of markers on a regularly up-dated map at the operational control centre of the organisation. In this way, task allocation by management is facilitated by the immediate availability of information as to who is where in the service area. As a further aid to management, a marker on the map may also indicate the present activity (if any) of the person or unit it represents and even the estimated time to complete that activity. Display systems of this type are already established in use by, inter alia, emergency, supply and transport services. The display normally comprises a map or similar wall chart with, for example, pins or magnetic markers manipulated by an operator in radio or other contact with the persons concerned.

It is an object of the present invention to provide an improved display system suitable for use in the aforedescribed circumstances.

According to the invention, there is provided a display system comprising display means adapted to produce a display, speech-signal recognition means, computer means and means for supplying speech command signals to the speech-signal recognition means, wherein the display comprises a map and at least one marker adapted to be positioned at any one of a plurality of points on the map, and the computer means is responsive to output signals of the speech-signal recognition means to determine the content of the display.

Preferably the or each marker and each of the plurality of points has a unique verbal identity recognised by the speech-signal recognition means so that a marker can be moved between any two points by spoken command.

The speech-signal recognition means may be adapted to be responsive exclusively to speech commands given by selected persons, and it may be further adapted to be responsive to the verbal identity of a given marker only when it is supplied by a specified one or more of those selected persons.

In a preferred embodiment of the invention, the identity of a marker is displayed on the map. Selected spoken information supplied with the identity of a marker may also be displayed on the map.

The means for supplying speech command signals may include a radio link or a telephone link.

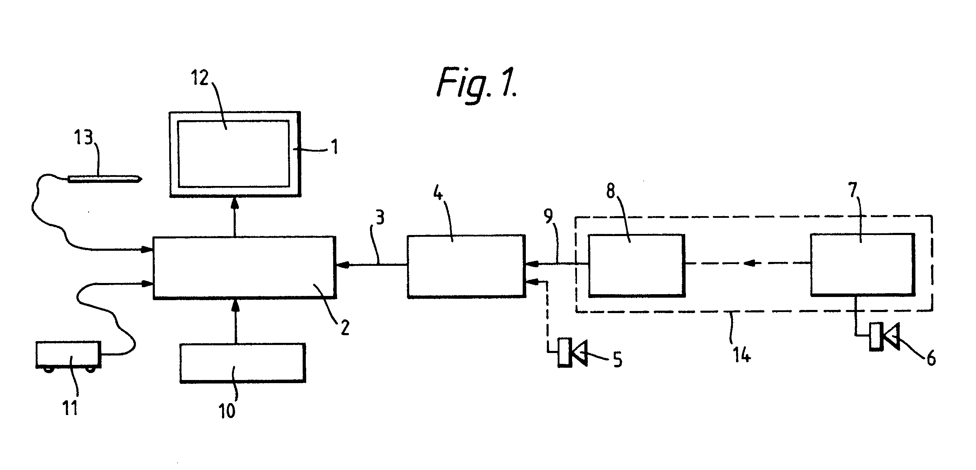

One display system in accordance with the invention will now be described, by way of example only, with reference to the accompanying drawing, Figure 1, which is a schematic block diagram of the system.

Referring to the drawing, there is shown a display means comprising a VDU monitor 1. The monitor 1 is connected to a desk-top computer 2. The computer 2 is fed with the output 3 of a speech-signal recognition means in the form of a hardware circuit 4. Signals representing spoken commands are supplied to the recognition circuit 4 either locally, by means of a microphone 5, or remotely, from a microphone 6, by means, for example, of a radio link 14 comprising a transmitter 7 and a receiver 8, the output 9 of the receiver 8 being connected to an input of the speech-signal recognition circuit 4. The monitor 1, computer 2, recognition circuit 4 and receiver 8 would ordinarily be installed at an operational control centre of the organisation using the system.

In operation of the system, the computer 2 is operated under the control of an application program which generates a map display on the monitor 1. The program is used to define particular points on the displayed map, each point representing a specific location and having a unique verbal identity, which the recognition circuit 4 is adapted to recognise. The identity of a point may be defined, for example, by assigning a code number. Alternatively, a grid or co-ordinate system may be established so that a particular location can be specified as a point of the map by means of its co-ordinates or the number of the grid within which it lies. Locations shown on the map may correspond to known landmarks, buildings, etc. The program is also adapted to enable markers representing individual persons, mobile units, etc. to be created and shown on the map at any of the defined locations. Each person represented on the map by a marker is also assigned a unique verbal identity by the allocation of an identification code, such as a simple number, which may be used by that person to identify himself to the system.

The object of the system is to provide a display map indicating the location of various system users within the area covered by the map and for such indications of locations to be regularly or continually up-dated automatically by the computer in response to spoken commands given by the system users. It is to be understood that the term map as used herein is to be interpreted broadly; it would, for instance, cover a plan of a large factory or office building or site. Up-dating of the display map is preferably achieved by spoken commands given directly to the system over the radio link 14 by the system users. There is also provision for a local operator in contact with the system users to provide the system with the up-date commands. A person reporting his location by means of the radio link gives his identification code and states his present location, using the relevant code number for the particular location, building or landmark, or, if appropriate, the map co-ordinates. Thus, in the case of direct remote control of the display, the person concerned may up-date his location on the map by giving over the radio link 14, in a defined manner using the vocabulary recognised by the speech-signal recognition circuit, his identification code and the code number or co-ordinates defining his new location. It will be appreciated that, although only one transmitter 7 is shown in the figure, each system user would ordinarily have his own personal transmitter. In the case of use by, for example, emergency services such as the police or a fire brigade, these transmitters may comprise hand-held "walkie-talkies" or in-vehicle radios, so that an existing communications network forms an integral part of the system.

For the purpose of maintaining system security, it is preferred that the speech-signal recognition circuit is responsive only to particular voices, i.e. those of the persons authorised to use the system. In this regard the recognition circuit may be further adapted so that it only responds to a particular speaker, or one of a number of selected speakers, when the speaker gives the correct identification code, i.e. the recognition circuit is programmed to associate exclusively particular voice characteristics with each identification code. Then, if an impostor attempts to break into the system by using the identification code of an authorised user, his voice will not match the code given and the system will not respond to his command. The system may include means adapted to generate an alarm signal in such circumstances.

Local control of the display by an operator at the control centre is only necessary when direct remote control by means of the speech-signal recognition circuit 4 is not possible or proves difficult, for instance, in the case of a poor quality radio link. In such circumstances, the relevant information is received over the radio link 14 by the local operator, who can then instruct the computer to up-date the map appropriately. This instruction can be given in a conventional manner by simply keying the received information into the computer via a keyboard 10, by using a mouse 11 or a screen pen 13, or, if the monitor 1 has a touch-sensitive screen 12, by using a finger to move the marker. Alternatively, the operator may use the speech recognition facility to move a marker either by direct spoken commands or, for example, by first shifting a cursor provided on the screen (using either the mouse 11, touch screen 12 or pen 13 as aforesaid) to the required new location of the marker and then verbally giving the relevant user's identification code into the microphone 5. For use in the latter mode of operation, the recognition circuit 4 may be programmed to be responsive exclusively to the voices of specified operators to provide an additional degree of system security.

Since there will be a number of users linked to the system and only one person at a time can communicate his information, the radio network is preferably configured so that, if necessary, in the manner of a telephone switchboard, the second and subsequent incoming radio calls are 'stacked' until the system has responded to a first call and is ready to receive a new command. Alternatively, incoming calls may be recorded by storing them temporarily, for example magnetically, for subsequent supply to the speech-signal recognition circuit. A simpler mode of operation would be for the operator to ask the remote users individually for location up-dates on a roll-call basis. This would reduce the likelihood of simultaneous broadcasts.

Although, by way of example, the remote control of the display has been described with reference to the use of a radio link 14, it will be appreciated that the system could equally be configured to receive instructions over a telephone line or other similar communications link. The system may also be arranged so that selected spoken information, supplied by a user with his identity and location, and recognised by the recognition circuit 4, is displayed on the map adjacent his marker. For instance, a person working for a service organisation may give his current activity at a particular location and his expected finish time for that activity, such information appearing on the display as an aid to management in task allocation.

Although the use of a desk-top computer has been described, the invention is not so limited and a mainframe computer could equally be employed. In either case, the speech-signal recognition means could be an integral part of the computer. The speech-signal recognition facility could be implemented either as a hardware circuit, as described, or by means of software. It will also be appreciated that, while in the system described a VDU monitor is used, any electronic display means having a display content controllable by computer would be suitable.

It is possible that the information collected by a number of systems of the type described could be shared by the use of Local and Wide Area Network technology. This would permit coverage of large geographic areas, enabling the provision of a distributed or centralised database of resource locations and availability.

## Claims

1. A display system comprising display means (1) adapted to produce a display, speech-signal recognition means (4), computer means (2) and means (4) for supplying speech command signals to said speech-signal recognition means (14), wherein said display comprises a map and at least one marker adapted to be positioned at any one of a plurality of points on said map, and said computer means (2) is responsive to output signals (3) of said speech-signal recognition means to determine the content of said display.

2. A display system according to Claim 1, wherein the or each marker and each of said plurality of points has a unique verbal identity recognised by said speech-signal recognition means (4) so that a marker can be moved between any two said points by spoken command.

3. A display system according to Claim 1 or Claim 2, wherein said speech-signal recognition means (4) is adapted to be responsive exclusively to speech commands given by selected persons.

4. A display system according to Claim 3, as appendent to Claim 2, wherein said speech-signal recognition means (4) is further adapted to be responsive to the verbal identity of a given marker only when it is supplied by a specified one or more of said selected persons.

5. A display system according to any of Claims 2 to 4, wherein the identity of a marker is displayed on said map.

6. A display system according to Claim 5, wherein selected spoken information supplied with the identity of a marker is displayed on said map.

7. A display system according to any preceding claim, wherein said means (14) for supplying speech command signals includes a radio link (7,8).

8. A display system according to any of Claims 1 to 6, wherein said means (14) for supplying speech command signals includes a telephone link.

Fig. 1.

EP 0 441 489 A2